# EUROPEAN PATENT SPECIFICATION

(11) **EP 4 636 685 B1**
(45) Date of publication and mention of the grant of the patent: **09.09.2026**
(21) Application number: 25168518.6
(22) Date of filing: 04.04.2025
(51) Int. Cl.: G06T 7/00

(54) **INSPECTION SYSTEM FOR TEXTILE MACHINERY**
INSPEKTIONSSYSTEM FÜR TEXTILMASCHINEN
SYSTÈME D'INSPECTION POUR MACHINE TEXTILE

(30) Priority: 18.04.2024 JP 2024067651; 12.03.2025 JP 2025039516
(43) Date of publication of application: 22.10.2025
(73) Proprietor: KABUSHIKI KAISHA TOYOTA JIDOSHOKKI, Kariya-shi, Aichi 448-8671 (JP)
(72) Inventor: MATSUOKA, Daisuke, Aichi, 448-8671 (JP)
(74) Representative: TBK

(56) References cited:
- CN-B- 104 790 078
- US-A1- 2022 341 069
- US-B2- 11 091 858

## Description

The present invention relates to an inspection system for textile machinery.

### BACKGROUND ART

Japanese Patent Application Publication No. 2020-196972 discloses a shedding defect detection device for a weaving machine for detecting warp shedding defects. The shedding defect detection device for a weaving machine includes: a camera for capturing an image of the shedding of warp threads; and a control device for detecting shedding defects based on the captured image captured by the camera. The captured image is stored in a storage unit of the control device.

Japanese Patent Application Publication No. 2021-144000 discloses an inspection system that includes: an imaging unit for capturing an image of a workpiece, a storage unit for storing the image captured by the imaging unit; a first determination unit for determining whether the workpiece in the image is defective; and a second determination device for determining whether to store the image in the storage unit. The distribution of measurement values for the workpieces determined non-defective by the first determination unit in a previous inspection is partitioned into N regions. The second determination unit stores the image in the storage unit when a measurement value of the workpiece measured in an inspection is classified into a region among the N regions where the number of images saved is lower than a specified number.

In Japanese Patent Application Publication No. 2020-196972, when the camera continuously captures images while the weaving machine is in operation, the number of the captured images becomes enormous. This strains the storage capacity of the storage unit if all of the captured images are saved. For example, the amount of data stored in the storage unit may be reduced by setting an upper limit on the number of the captured images to be saved, as disclosed in Japanese Patent Application Publication No. 2021-144000. In this case, however, since the number of the captured images in each region is not recognized, the overall distribution of the captured images across all regions may not be obtained. Accordingly, the condition of the workpiece is not easily observable.

Document US11091858B2 discloses a fabric inspection system for textile machinery, comprising an imager for collecting image data from the weaving area of a loom, an image processor for analysing the image data to identify irregularities indicative of weaving faults, and a controller configured to record detected faults, including fault counts and statistical distribution, and to output the results or to stop or adjust the loom in response to detected defects.

The present invention, which has been made in light of the above-mentioned problem, is directed to providing an inspection for textile machinery that enables the acquisition of the distribution of the degree of abnormality in textile machinery while reducing an amount of data stored in a storage unit.

### SUMMARY

The invention is defined by the appended claims. In accordance with an aspect of the present invention, there is provided an inspection system for textile machinery. The inspection system includes a camera for capturing images of the textile machinery. The inspection system is configured to inspect the textile machinery based on the captured images of the textile machinery acquired from the camera. The inspection system includes: a classification unit; a storage unit for storing the captured images for each of the groups; a counting unit; and a determination unit. The classification unit is configured to detect a degree of abnormality in the textile machinery based on each of the captured images newly acquired from the camera, and classify the newly acquired captured image into an appropriate group of a plurality of groups based on the degree of abnormality in the textile machinery detected. The counting unit is configured to count the cumulative number of the captured images of a target group that is the group into which the newly acquired captured image is classified. The counting unit is configured to store the counted cumulative number of the captured images of the target group in the storage unit. The determination unit is configured to determine whether the counted cumulative number of the captured images of the target group stored in the storage unit has reached a predetermined upper limit. The determination unit is configured to additionally store the newly acquired captured image classified in the target group in the storage unit as the captured image of the target group when the determination unit determines that the counted cumulative number of the captured images of the target group stored in the storage unit has not reached the predetermined upper limit. The determination unit is configured to determine whether to replace a captured image of the captured images of the target group stored in the storage unit with the newly acquired captured image classified in the target group when the determination unit determines that the counted cumulative number of the captured images of the target group stored in the storage unit has reached the predetermined upper limit.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the embodiments together with the accompanying drawings in which:
FIG. 1 is a block diagram of an inspection system for textile machinery;
FIG. 2 is a schematic diagram of an example of a captured image captured by a camera;
FIG. 3 is a block diagram of functional elements of a control device;
FIG. 4 is a flowchart of a captured image saving process performed by the control device;
FIG. 5 is a diagram of an example of data stored in an auxiliary storage unit;
FIG. 6 is a schematic diagram of an example of a table displayed on a display device; and
FIG. 7 is a schematic diagram of an example of a captured image displayed on the display device.

### DETAILED DESCRIPTION OF THE EMBODIMENTS

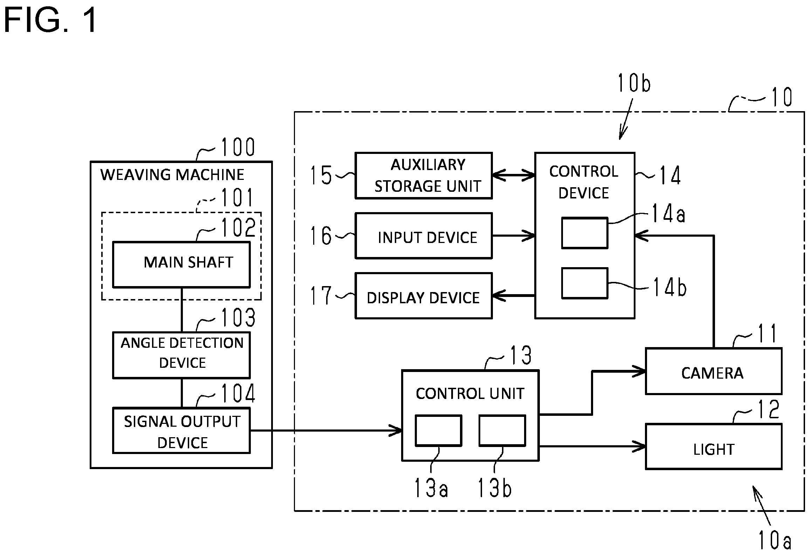

The following will describe an embodiment of an inspection system for textile machinery with reference to FIGS. 1 through 7. The inspection system according to the present embodiment is applied to a weaving machine serving as textile machinery. In the following description, the inspection system for textile machinery will be simply referred to as the inspection system.

### Weaving machine

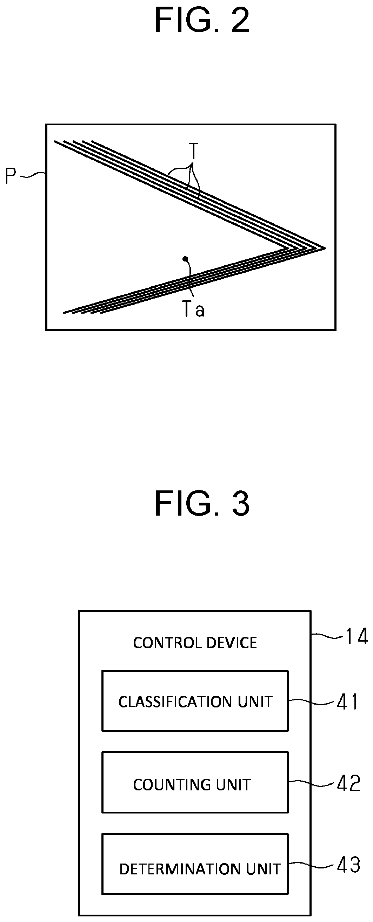

FIG. 1 illustrates a weaving machine 100 that serves as the textile machinery of the present invention and includes a loom frame 101. The loom frame 101 includes a weft insertion nozzle (not illustrated) and a main shaft 102. The loom frame 101 has a first end and a second end that define the loom frame 101 in the width direction of the loom frame 101. The weft insertion nozzle is disposed at the first end of the loom frame 101. In the present embodiment, the weaving machine 100 is an air jet loom. The weft insertion nozzle injects air toward the second end from the first end to insert a weft thread into a shed Ta of warp threads T (see FIG. 2). The main shaft 102 is driven by a main motor (not illustrated). The timing of weft insertion by the weft insertion nozzle corresponds to a rotation angle of the main shaft 102. Specifically, the weft insertion nozzle inserts the weft thread at the timing when the main shaft 102 rotates by a predetermined first angle from a predetermined reference angle.

The weaving machine 100 includes an angle detection device 103 and a signal output device 104. The angle detection device 103 is configured to detect the rotation angle of the main shaft 102. The angle detection device 103 is, for example, a rotary encoder. The angle detection device 103 is connected to the signal output device 104. The angle detection device 103 transmits the detected rotation angle of the main shaft 102 to the signal output device 104. The signal output device 104 receives the rotation angle of the main shaft 102 from the angle detection device 103, and outputs a signal to a control unit 13 of an inspection system 10 every time the detected rotation angle of the main shaft 102 becomes the reference angle.

### Inspection system

The inspection system 10 includes an imaging device 10a and a computer 10b. The imaging device 10a includes a camera 11, a light 12, and the control unit 13. The computer 10b includes a control device 14, an auxiliary storage unit 15 serving as the storage unit of the present invention, an input device 16, and a display device 17. The inspection system 10 inspects the weaving machine 100 based on a captured image captured by the camera 11.

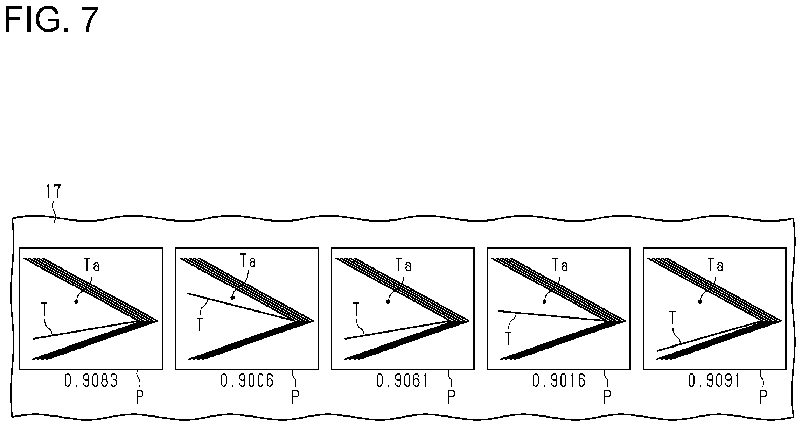

For example, if some of the warp threads T are located in the shed Ta (see FIG. 7), an abnormality has occurred in the weaving machine 100. For example, an increased amount or an increased number of the warp threads T located in the shed Ta correlates with a higher degree of abnormality in the weaving machine 100. The inspection system 10 of the present embodiment inspects the weaving machine 100 based on the warp threads T in the captured image.

The camera 11 is a digital camera. The camera 11 has an imaging element. Examples of the imaging element include a charge coupled device (CCD) image sensor and a complementary metal oxide semiconductor (CMOS) image sensor.

The camera 11 is disposed at a position where an image of the shed Ta of the warp threads T can be captured. Specifically, the camera 11 is disposed at the first end of the loom frame 101, which is the end of the loom frame 101 near the weft insertion nozzle. The camera 11 captures an image of the shed Ta of the warp threads T from upstream in the weft insertion direction. The camera 11 embeds a timestamp of the capture time in the captured image.

FIG. 2 is a schematic diagram of an example of the captured image (captured image P) captured by the camera 11. The captured image P shows the shed Ta of the warp threads T. In the captured image P, none of the warp threads T are located in the shed Ta.

The light 12 of the present embodiment is an LED light. The light 12 is disposed at a position where the shed Ta of the warp threads T can be illuminated with the light 12. Specifically, the light 12 is disposed at the first end of the loom frame 101 near the weft insertion nozzle. The light 12 illuminates the shed Ta of the warp threads T from upstream in the weft insertion direction.

As illustrated in FIG. 1, the control unit 13 includes a processor 13a and a main storage unit 13b. Examples of the processor 13a may include a central processing unit (CPU), a graphics processing unit (GPU), and a digital signal processor (DSP). Examples of the main storage unit 13b include random access memory (RAM) and read only memory (ROM). The main storage unit 13b stores program code or instructions for causing the processor 13a to execute the processing. The main storage unit 13b, i.e., a computer-readable medium, includes any available medium accessible by a general-purpose or dedicated computer. The control unit 13 may include a hardware circuit, such as an application specific integrated circuit (ASIC) or a field programmable gate array (FPGA). The control unit 13, which is a processing circuit, may include one or more processors operating in accordance with a computer program, one or more hardware circuits, such as ASICs and FPGAs, or combinations thereof.

The control unit 13 is connected to the camera 11 and the light 12. The control unit 13 controls the timing of image capture by the camera 11 and the timing of illumination by the light 12. The control unit 13 is connected to the signal output device 104 of the weaving machine 100. The signal output device 104 outputs a signal, which serves an external input signal, to the control unit 13. By receiving the external input signal, the control unit 13 recognizes the timing at which the rotation angle of the main shaft 102 becomes the reference angle. The control unit 13 outputs a trigger signal to the camera 11 and the light 12 simultaneously every time the main shaft 102 rotates by a predetermined second angle from the reference angle.

The camera 11 captures an image (i.e., captured image) when receiving the trigger signal from the control unit 13. The light 12 illuminates by receiving the trigger signal from the control unit 13. The camera 11 and the light 12 simultaneously receive the trigger signal, so that the light 12 illuminates the shed Ta of the warp threads T at the same time that the camera 11 captures the image of the shed Ta of the warp threads T.

The control device 14 includes a processor 14a and a main storage unit 14b. Examples of the processor 14a may include a CPU, a GPU, and a DSP. Examples of the main storage unit 14b include RAM and ROM. The main storage unit 14b stores program code or instructions for causing the processor 14a to execute the processing. The main storage unit 14b, i.e., a computer-readable medium, includes any available medium accessible by a general-purpose or dedicated computer. The control device 14 may include a hardware circuit, such as an ASIC or an FPGA. The control device 14, which is a processing circuit, may include one or more processors operating in accordance with a computer program, one or more hardware circuits, such as ASICs and FPGAs, or combinations thereof.

The control device 14 is connected to the auxiliary storage unit 15, the input device 16, and the display device 17. The auxiliary storage unit 15 is a rewritable non-volatile storage. The auxiliary storage unit 15 is, for example, a hard disk drive or a solid state drive. The input device 16 is, for example, a keyboard or a mouse. The display device 17 is a display. The control device 14 is connected to the camera 11 of the imaging device 10a. The control device 14 acquires the captured image captured by the camera 11. In the present embodiment, the control device 14 acquires the captured image from the camera 11 each time the camera 11 captures an image of the shed Ta of the warp threads T. Specifically, the control device 14 acquires one captured image from the camera 11 when the camera 11 captures an image of the shed Ta of the warp threads T once.

As illustrated in FIG. 3, the control device 14 includes a classification unit 41, a counting unit 42, and a determination unit 43. The classification unit 41, the counting unit 42, and the determination unit 43 are functional elements that function when the processor 14a executes a program stored in the main storage unit 14b.

Each time the control unit 14 newly acquires a capture image from the camera 11, the classification unit 41 detects the degree of abnormality in the weaving machine 100 based on the newly acquired captured image of the weaving machine 100. The classification unit 41 of the present embodiment assigns the detection result of the degree of abnormality in the weaving machine 100 to the captured image. The classification unit 41 classifies the newly acquired captured image into an appropriate one of a plurality of groups based on the degree of abnormality in the weaving machine 100 shown in the newly acquired captured image.

The auxiliary storage unit 15 stores the captured images for each of the groups.

The counting unit 42 counts the cumulative number of the captured images classified in each group. The counting unit 42 counts the cumulative number of the captured images in a target group, which is one of the groups into which the newly acquired captured image is classified. The counting unit 42 stores the counted cumulative number of the captured images, i.e., the cumulative number of the captured images classified in the target group, in the auxiliary storage unit 15.

The determination unit 43 determines for each group whether the cumulative number of the captured images stored in the auxiliary storage unit 15 has reached a predetermined upper limit determined for each group. The determination unit 43 determines whether the counted cumulative number of the captured images of the target group stored in the auxiliary storage unit 15 has reached the predetermined upper limit for the target group. In the present embodiment, the predetermined upper limit for the cumulative number of the captured images in each group is five. That is, the determination unit 43 of the present embodiment determines whether the cumulative number of the captured images of the target group stored in the auxiliary storage unit 15 has reached five.

When the determination unit 43 determines that the counted cumulative number of the captured images of the target group stored in the auxiliary storage unit 15 has not reached the predetermined upper limit, the determination unit 43 additionally stores the newly acquired captured image classified in the target group in the auxiliary storage unit 15. When the determination unit 43 determines that the counted cumulative number of the captured images of the target group stored in the auxiliary storage unit 15 has reached the predetermined upper limit, the determination unit 43 determines whether to replace one of the captured images of the target group stored in the auxiliary storage unit 15 with the newly acquired captured image classified in the target group. Specifically, when the upper predetermined upper limit us two or more, the determination unit 43 determines one of the captured images in the target group in the auxiliary storage unit 15 with the captured image newly acquired.

### Process performed by the control device 14

The following will describe the process performed by the control device 14. In the present embodiment, the control device 14 performs the following process each time the control device 14 newly acquires the captured image from the camera 11.

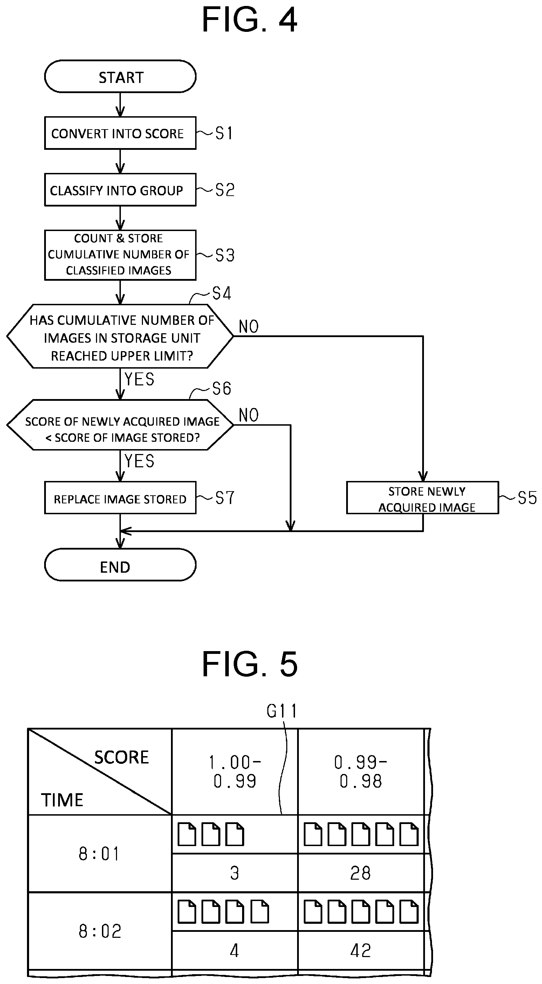

As illustrated in FIG. 4, in step S1, the classification unit 41 detects the degree of abnormality in the weaving machine 100 based on the warp threads T in the captured image newly acquired from the camera 11. The classification unit 41 of the present embodiment converts the degree of abnormality in the weaving machine 100 into a score. The score is calculated on a scale from 0 to 1, rounded to four decimal places. The classification unit 41 includes an artificial intelligence (AI) that has learned by using a captured image of the normal weaving machine 100 as the reference image. The score calculated (converted) by the classification unit 41 is closer to 1 for the captured image captured by the camera 11 that is more similar to the reference image. That is, the score calculated by the classification unit 41 decreases as the degree of abnormality in the weaving machine 100 increases. For example, when the classification unit 41 detects the degree of abnormality in the weaving machine 100 based on the warp threads T in the captured image P illustrated in FIG. 2, the classification unit 41 converts the degree of abnormality in the weaving machine 100 in the captured image P into a score of 0.9998 based on the similarity between the reference image and the captured image P.

In step S2, the classification unit 41 classifies the captured image newly acquired from the camera 11 into an appropriate group of the plurality of groups based on the degree of abnormality in the weaving machine 100 detected in step S1. The classification unit 41 of the present embodiment classifies the captured image newly acquired from the camera 11 into the appropriate group of the plurality of groups based on the degree of abnormality in the weaving machine 100 calculated in step S1 and the capture time of the captured image.

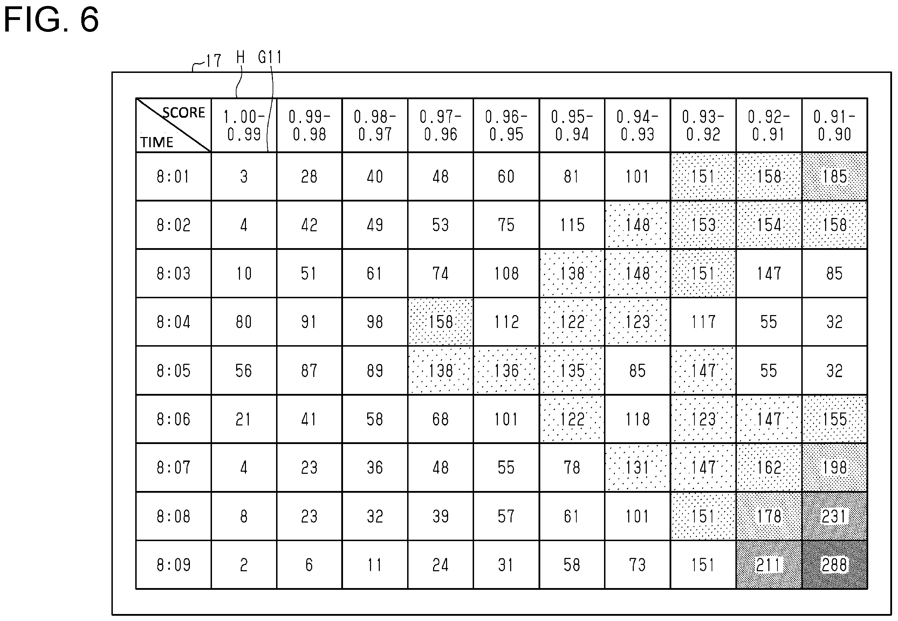

As illustrated in FIG. 5 and FIG. 6, in the present embodiment, the captured images are classified into the plurality of groups based on their scores, with the score range of each group having a difference of 0.01 (in this embodiment, decrements of 0.01). For example, in FIG. 5 and FIG. 6, the classification unit 41 classifies the captured image into an appropriate one of the plurality of groups based on its score rounded to the third decimal place. For example, the classification unit 41 classifies the captured image with a score from 0.999 to 0.995 into a group having a score range of 1.00 to 0.99. For example, the classification unit 41 classifies the captured image with a score from 0.994 to 0.990 into a group having a score range of 0.99 to 0.98.

Furthermore, the captured images are classified into the plurality of groups based on the their capture times, with the capture time range of each group increasing in one minute increments. That is, there are the plurality of groups for the captured images based on scores and capture times of the captured images. For example, when the captured images are classified into M groups based on their scores and N groups based on their capture times, there is a total of M × N groups. M and N are each an integer of 2 or more.

The classification unit 41 classifies the captured image into an appropriate group of the groups based on the score of the weaving machine 100 in the captured image and the capture time of the captured image. For example, as illustrated in FIG. 5, when the captured image has a score of 0.9998 and a capture time of 8:01, the classification unit 41 classifies the captured image into group G11 having a score range of 1.00 to 0.99 and a capture time range of 8:01.

As illustrated in FIG. 4, in step S3, the counting unit 42 counts the cumulative number of the captured images classified in the target group. Specifically, the counting unit 42 increments the previously counted cumulative number of the captured images in the target group by one. Furthermore, in step S3, the counting unit 42 stores the cumulative number of the captured images counted, i.e., the cumulative number of the captured images classified in the target group, in the auxiliary storage unit 15.

In step S4, the determination unit 43 determines whether the cumulative number of the captured images in the target group stored in the auxiliary storage unit 15 has reached a predetermined upper limit.

When the determination unit 43 determines that the counted cumulative number of the captured images of the target group stored in the auxiliary storage unit 15 has not reached the predetermined upper limit (NO in step S4), the process continues to step S5. In step S5, the determination unit 43 additionally stores the newly acquired captured image classified in the target group in the auxiliary storage unit 15 as the captured image of the target group. Specifically, when the cumulative number of the captured images of the target group stored in the auxiliary storage unit 15 is four or less, the determination unit 43 additionally stores the newly acquired captured image classified in the target group in the auxiliary storage unit 15 as the captured image of the target group.

When the cumulative number of the captured images of the target group stored in the auxiliary storage unit 15 has reached the predetermined upper limit (YES in step S4), the process continues to step S6. In step S6, the determination unit 43 determines whether to replace one of the captured images of the target group stored in the auxiliary storage unit 15 with the newly acquired captured image classified in the target group. For example, when the cumulative number of the captured images of the target group stored in the auxiliary storage unit 15 is five, the determination unit 43 determines whether to replace one of the captured images of the target group stored in the auxiliary storage unit 15 with the newly acquired captured image classified in the target group.

When the score of the newly acquired captured image is lower than the highest score among the scores of the captured images of the target group stored in the auxiliary storage unit 15 (YES in step S6), the process continues to step 7. In step 7, the determination unit 43 replaces the captured image having the highest score of the target group with the newly acquired captured image classified in the target group. That is, the determination unit 43 deletes the captured image having the highest score from the auxiliary storage unit 15, and newly stores the newly acquired captured image in the auxiliary storage unit 15 as the captured image of the target group.

When the score of the newly acquired captured image is equal to or higher than the highest score among the scores of the captured images of the target group stored in the auxiliary storage unit 15 (NO in step S6), the determination unit 43 ends the captured image saving process. That is, the determination unit 43 does not replace the captured image having the highest score among the scores of the captured images of the target group stored in the auxiliary storage unit 15 with the newly acquired captured image. The determination unit 43 deletes the newly acquired captured image without storing it in the auxiliary storage unit 15.

As illustrated in FIG. 5, in the auxiliary storage unit 15, the captured images and the cumulative number of the captured images are stored by group.

In FIG. 5, the number of icons displayed in the upper row of each group indicates the number of the captured images stored in the auxiliary storage unit 15 as the captured images of the group stored in the auxiliary storage unit 15. As previously described, the determination unit 43 determines whether to replace one of the captured images of the target group stored in the auxiliary storage unit 15 with the newly acquired captured image classified in the group. That is, when the cumulative number of the captured images of the target group stored in the auxiliary storage unit 15 has reached the predetermined upper limit, the determination unit 43 does not store the newly acquired captured image in the auxiliary storage unit 15. Therefore, in the present embodiment, the cumulative number of the captured images stored in the auxiliary storage unit 15 is maintained at a maximum of five in each group.

In FIG. 5, the number displayed in the lower row in each group indicates the cumulative number of the captured images classified in each group. The counting unit 42 counts the cumulative number of the captured images classified in each group regardless of the number of the captured images stored in the auxiliary storage unit 15, so that the cumulative number of the captured images classified in each group may become five or more.

As illustrated in FIG. 6, the control device 14 creates a table H indicating the cumulative number of the captured images classified in each group. The control device 14 of the present embodiment creates the table H in a heatmap format based on the cumulative number of the captured images classified in each group.

For example, the table H may display the groups with the cumulative number of the captured images ranging from 120 to less than 150 in light green. The groups with the cumulative number of the captured images ranging from 150 to less than 175 may be displayed in dark green. The groups with the cumulative number of the captured images ranging from 175 to less than 200 may be displayed in light red. The groups with the cumulative number of the captured images ranging from 200 to less than 250 may be displayed in red. The groups with the cumulative number of the captured images of 250 or more may be displayed in dark red. In the table H shown in FIG. 6, the density of dot hatching is increased as the cumulative number of the captured images increases to express the table in a heatmap format.

The control device 14 causes the display device 17 to display the table H. The display device 17 displays the table H indicating the cumulative number of the captured images classified in each group. The display device 17 of the present embodiment displays the table H in a heatmap format based on the cumulative number of the captured images classified in each group.

An operator uses the input device 16 to select from the table H displayed on the display device 17 a group for which the captured images are to be checked. The control device 14 causes the display device 17 to display the captured images of the group selected by the operator via the input device 16 from among the captured images of the groups stored in the auxiliary storage unit 15. The control device 14 of the present embodiment causes the display device 17 to also display the score of the weaving machine 100 together with each captured image.

FIG. 7 is a schematic diagram of an example of the captured image P displayed on the display device 17. In FIG. 7, five captured images P are displayed on the display device 17. In FIG. 7, the score of the weaving machine 100 is displayed below each captured image P.

### Operation of embodiment

The following will describe operation of the present embodiment.

The inspection system 10 that inspects the weaving machine 100 based on the captured image captured by the camera 11 includes the classification unit 41, the auxiliary storage unit 15, the counting unit 42, and the determination unit 43.

Each time the control device 14 newly acquires the captured image from the camera 11, the classification unit 41 detects the degree of abnormality in the weaving machine 100 based on the newly acquired captured image of the weaving machine 100. The classification unit 41 classifies the newly acquired captured image into an appropriate group of the plurality of groups based on the degree of abnormality in the weaving machine 100 shown in the newly acquired captured image. The captured images are stored in the auxiliary storage unit 15 for each of the groups.

The counting unit 42 counts the cumulative number of the captured images classified in the target group into which the newly acquired captured image is classified. The counting unit 42 stores the counted cumulative number of the captured images, i.e., the cumulative number of the captured images classified in the target group, in the auxiliary storage unit 15. This enables the acquisition of the distribution of the degree of abnormality in the weaving machine 100 without saving all of the captured images.

The determination unit 43 determines whether the counted cumulative number of the captured images of the target group stored in the auxiliary storage unit 15 has reached the predetermined upper limit. The determination unit 43 additionally stores the newly acquired captured image classified in the target group in the storage unit 15 as the captured image of the target group when the determination unit 43 determines that the counted cumulative number of the captured images of the target group stored in the storage unit 15 has not reached the predetermined upper limit. The determination unit 43 determines whether to replace one of the captured images P of the target group stored in the storage unit 15 with the newly acquired captured image classified in the target group when the determination unit 43 determines that the counted cumulative number of the captured images P of the target group stored in the storage unit 15 has reached the predetermined upper limit This limits the number of the captured images stored in the auxiliary storage unit 15 so as not to exceed the predetermined upper limit, thereby reducing the amount of data stored in the auxiliary storage unit 15.

### Advantageous effects of embodiment

The following will describe advantageous effects of the present embodiment.
(1) The determination unit 43 determines whether to replace one of the captured images of the target group stored in the auxiliary storage unit 15 with a newly acquired captured image when the counted cumulative number of the captured images of the target group stored in the auxiliary storage unit 15 has reached the predetermined upper limit. This limits the cumulative number of the captured images stored in the auxiliary storage unit 15 for each group so as not to exceed the predetermined upper limit, thereby reducing the amount of data stored in the auxiliary storage unit 15. Furthermore, the counting unit 42 counts the cumulative number of the captured images classified in each of the groups, and stores the cumulative number of the captured images counted in the auxiliary storage unit 15. This enables the acquisition of the distribution of the degree of abnormality in the weaving machine 100 without saving all of the captured images. This therefore enables the acquisition of the distribution of the degree of abnormality in the weaving machine 100 while reducing the amount of data stored in the auxiliary storage unit 15.
(2) The classification unit 41 converts the degree of abnormality in the weaving machine 100 in each of the captured images into a score. The classification unit 41 classifies each of the captured images into an appropriate group of the plurality of groups based on its score. This allows more precise detection of the degree of abnormality in the weaving machine 100, compared to a case where the degree of abnormality in the weaving machine 100 is detected in levels, such as S, A, B, C, or excellent, good, fair, and poor.
(3) The score calculated by the classification unit 41 decreases as the degree of abnormality in the weaving machine 100 increases. When the score of the newly acquired captured image classified in the target group is lower than the highest score among the scores of the captured images of the target group stored in the auxiliary storage unit 15, the determination unit 43 replaces the captured image having the highest score of the target group with the newly acquired captured image.
   Accordingly, a captured image with a low score, i.e., a captured image showing a high degree of abnormality in the weaving machine 100, is preferentially stored in the auxiliary storage unit 15. This facilitates the use of the captured images to investigate a cause of abnormality in the weaving machine 100, compared to a case where a captured image with a high score, i.e., a captured image showing a low degree of abnormality in the weaving machine 100, is preferentially stored in the auxiliary storage unit 15.
(4) The classification unit 41 classifies each of the captured images into the appropriate group of the plurality of groups based on the capture time of the captured image. This enables acquisition of the temporal changes in the distribution of the degree of abnormality in the weaving machine 100. The temporal changes in the distribution of the degree of abnormality in the weaving machine 100 are useful for understanding the state of the weaving machine 100, for example, when the operating conditions of the weaving machine 100 are changed while the weaving machine 100 is in operation, or when the installation environment of the weaving machine 100 changes.
(5) The inspection system 10 includes the display device 17. The display device 17 displays the table H indicating the cumulative number of the captured images classified in each group. This allows the operator to easily understand the distribution of the degree of abnormality in the weaving machine 100.
(6) The display device 17 displays the table H in a heatmap format based on the cumulative number of the captured images classified in each group. This allows the operator to more easily understand the distribution of the degree of abnormality in the weaving machine 100.
(7) The determination unit 43 does not end saving the newly acquired captured images of the target group and determines whether to replace one of the captured images of the target group stored in the auxiliary storage unit 15 with the newly acquired captured image classified in the target group, when the counted cumulative number of the captured images of the target group stored in the auxiliary storage unit 15 has reached the predetermined upper limit. This allows the auxiliary storage unit 15 to store the captured images more appropriate for saving.

### Modification examples

The invention is defined by the appended claims.

In the embodiment, each time the control device 14 newly acquires the captured image from the camera 11, the classification unit 41 detects the degree of abnormality in the weaving machine 100 based on the newly acquired captured image of the weaving machine 100, but the present invention is not limited thereto. The classification unit 41 may detect the degree of abnormality in the weaving machine 100 when the number of the captured images acquired from the camera 11 has reached an upper limit predetermined for the number of the captured images acquired from the camera 11.

In the embodiment, the present embodiment, the control device 14 acquires the captured image from the camera 11 each time the camera 11 captures an image of the shed Ta of the warp threads T, but the present invention is not limited thereto. When the camera 11 has captured the predetermined number of images of the shed Ta of the warp threads T, the control device 14 may acquire the predetermined number of the captured images at once.

The classification unit 41 may detect the degree of abnormality in the weaving machine 100 in levels, such as S, A, B, C, or excellent, good, fair, and poor.

In the embodiment, the classification unit 41 classifies each of the captured images into an appropriate one of the plurality of groups based on the degree of abnormality in the weaving machine 100 and the capture time of each of the captured images, but the present invention is not limited thereto.

The classification unit 41 may classify each of the captured images into an appropriate one of the plurality of groups based only on the degree of abnormality in the weaving machine 100 in the captured images.

The classification unit 41 may classify each of the captured images into an appropriate one the plurality of groups based on conditions other than the degree of abnormality in the weaving machine 100 and the capture time of each of the captured images. Examples of conditions include the operating conditions and the installation environment of the weaving machine 100.

In the embodiment, the captured images are classified by the classification unit 41 into an appropriate one of the plurality of groups based on their scores, with the score range of each group having a difference of 0.01, but the difference is not limited to 0.01, and may be changed as appropriate.

The difference does not have to be constant. For example, the scores are calculated on a scale from 0 to 1, but the difference of the score range between some of the groups may be smaller than that between the rest of the groups.

For example, the captured images may be classified into three groups based on the their scores, for example. In this case, of the three groups, the score range of the first group is equal to or lower than the first score of the weaving machine 100. The score range of the second group is equal to or greater than the second score of the weaving machine 100. The second score is greater than the first score. The score range of the third group is greater than the first score and less than the second score.

In the embodiment, the captured images are classified by the classification unit 41 into an appropriate one of the plurality of groups based on the their capture times, with the capture time range of each group increasing in one minute increments. However, the difference is not limited to one minute, and may be changed as appropriate.

The predetermined upper limit of the cumulative number of the captured images is not limited to five and may be changed as appropriate.

The predetermined upper limit may be different for each group.

In the embodiment, when the score of the newly acquired captured image is lower than the highest score among the scores of the captured images of the target group stored in the auxiliary storage unit 15, the determination unit 43 replaces the captured image having the highest score of the group with the newly acquired captured image, but the present invention is not limited thereto.

When the score of the newly acquired captured image is higher than the lowest score among the scores of the captured images of the target group stored in the auxiliary storage unit 15, the determination unit 43 may replace the captured image with the lowest score with the newly acquired captured image. In this case, a captured image with a high score, i.e., a captured image showing a low degree of abnormality in the weaving machine 100, is preferentially stored in the auxiliary storage unit 15.

The camera 11 may include a plurality of cameras 11.

The storage unit of the present invention is not limited to the auxiliary storage unit 15. For example, the main storage unit 14b of the control device 14, or a storage unit or a cloud in the loom frame 101 may serve as the storage unit of the present invention.

The classification unit 41, the counting unit 42, and the determination unit 43 are not limited to the control device 14 of the computer 10b. For example, a controller for controlling the weaving machine 100 may serve as the classification unit 41, the counting unit 42, and the determination unit 43.

The display device 17 does not necessarily have to display the table H in a heatmap format.

In the embodiment, the classification unit 41 detects the degree of abnormality in the weaving machine 100 based on the warp threads T in the captured image, but the classification unit 41 may detect the degree of abnormality in the weaving machine 100 based on the weft threads or units of the weaving machine 100 shown in the captured image.

The inspection system 10 for textile machinery may be applied to textile machinery other than the weaving machine 100, such as a spinning machine.

## Claims

1. An inspection system (10) for textile machinery (100), the inspection system (10) comprising a camera (11) for capturing images (P) of the textile machinery (100), the inspection system (10) being configured to inspect the textile machinery (100) based on the captured images (P) of the textile machinery (100) acquired from the camera (11), wherein
the inspection system (10) includes:
a classification unit (41) configured to detect a degree of abnormality in the textile machinery (100) based on each of the captured images (P) newly acquired from the camera (11), and classify the newly acquired captured image (P) into an appropriate group of a plurality of groups based on the degree of abnormality in the textile machinery (100) detected;
a storage unit (15) for storing the captured images (P) for each of the groups;
a counting unit (42) configured to count the cumulative number of the captured images (P) of a target group that is the group into which the newly acquired captured image is classified, and the counting unit (42) being configured to store the counted cumulative number of the captured images (P) of the target group in the storage unit (15); and
a determination unit (43) configured to determine whether the counted cumulative number of the captured images (P) of the target group stored in the storage unit (15) has reached a predetermined upper limit, the determination unit (43) being configured to additionally store the newly acquired captured image classified in the target group in the storage unit (15) as the captured image of the target group when the determination unit (43) determines that the counted cumulative number of the captured images (P) of the target group stored in the storage unit (15) has not reached the predetermined upper limit, the determination unit (43) being configured to determine whether to replace a captured image of the captured images (P) of the target group stored in the storage unit (15) with the newly acquired captured image classified in the target group when the determination unit (43) determines that the counted cumulative number of the captured images (P) of the target group stored in the storage unit (15) has reached the predetermined upper limit.

2. The inspection system (10) for the textile machinery (100) according to claim 1, **characterized in that** the classification unit (41) converts the degree of abnormality in the textile machinery (100) into a score, and classifies the newly acquired captured image (P) into the appropriate group of the plurality of groups based on the score.

3. The inspection system (10) for the textile machinery (100) according to claim 2, **characterized in that**
the score decreases as the degree of abnormality in the textile machinery (100) increases, and
when the score of the newly acquired captured image (P) classified in the target group is lower than the highest score among the scores of the captured images (P) of the target group stored in the storage unit (15), the determination unit (43) replaces the captured image (P) having the highest score of the target group stored in the storage unit (15) with the newly acquired captured image (P) classified in the target group.

4. The inspection system (10) for the textile machinery (100) according to any one of claims 1 to 3, **characterized in that** the classification unit (41) classifies the newly acquired captured image (P) into the appropriate group of the plurality of groups based on a capture time of the captured image (P).

5. The inspection system (10) for the textile machinery (100) according to any one of claims 1 to 4, **characterized in that**
the inspection system (10) includes a display device (17), and
the display device (17) displays a table (H) indicating the counted cumulative number of the captured images (P) classified in each of the groups.

6. The inspection system (10) for the textile machinery (100) according to claim 5, **characterized in that**
the display device (17) displays the table (H) in a heatmap format based on the counted cumulative number of the captured images (P) classified in each of the groups.

## Patentansprüche

1. Inspektionssystem (10) für eine Textilmaschine (100), wobei das Inspektionssystem (10) eine Kamera (11) zum Erfassen von Bildern (P) der Textilmaschine (100) umfasst, wobei das Inspektionssystem (10) konfiguriert ist, um die Textilmaschine (100) auf der Grundlage der erfassten Bilder (P) der Textilmaschine (100), die von der Kamera (11) beschafft wurden, zu inspizieren, wobei
das Inspektionssystem (10) aufweist:
eine Klassifizierungseinheit (41), die konfiguriert ist, um auf Grundlage jedes der erfassten Bilder (P), die von der Kamera (11) neu beschafft wurden, einen Anomalie-Grad in der Textilmaschine (100) zu ermitteln, und das neu beschaffte erfasste Bild (P) auf der Grundlage des ermittelten Anomalie-Grades in der Textilmaschine (100) in eine geeignete Gruppe aus einer Vielzahl von Gruppen zu klassifizieren;
eine Speichereinheit (15) zum Speichern der erfassten Bilder (P) für jede der Gruppen;
eine Zähleinheit (42), die konfiguriert ist, um die kumulative Anzahl der erfassten Bilder (P) einer Zielgruppe, welche die Gruppe ist, in die das neu erfasste Bild klassifiziert wird, zu zählen und wobei die Zähleinheit (42) konfiguriert ist, um die gezählte kumulative Anzahl der erfassten Bilder (P) der Zielgruppe in der Speichereinheit (15) zu speichern; und
eine Bestimmungseinheit (43), die konfiguriert ist, um zu bestimmen, ob die gezählte kumulative Anzahl der erfassten Bilder (P) der Zielgruppe, die in der Speichereinheit (15) gespeichert ist, eine vorbestimmte Obergrenze erreicht hat, wobei die Bestimmungseinheit (43) konfiguriert ist, um die neu beschafften erfassten Bilder, die in die Zielgruppe klassifiziert sind, zusätzlich in der Speichereinheit (15) als das erfasste Bild der Zielgruppe zu speichern, wenn die Bestimmungseinheit (43) bestimmt, dass die gezählte kumulative Anzahl der erfassten Bilder (P) der Zielgruppe, die in der Speichereinheit (15) gespeichert ist, die vorgegebene Obergrenze noch nicht erreicht hat, wobei die Bestimmungseinheit (43) konfiguriert ist, um zu bestimmen, ob ein erfasstes Bild von den erfassten Bildern (P) der Zielgruppe, die in der Speichereinheit gespeichert sind, durch das neu beschaffte erfasste Bild, das in die Zielgruppe klassifiziert ist, ersetzt werden soll, wenn die Bestimmungseinheit (43) feststellt, dass die gezählte kumulative Anzahl der erfassten Bilder (P) der Zielgruppe, die in der Speichereinheit (15) gespeichert ist, die vorbestimmte Obergrenze erreicht hat.

2. Inspektionssystem (10) für die Textilmaschine (100) nach Anspruch 1, **dadurch gekennzeichnet, dass** die Klassifizierungseinheit (41) den Anomalie-Grad in der Textilmaschine (100) in einen Wert umwandelt und das neu beschaffte erfasste Bild (P) auf Grundlage des Werts in die geeignete Gruppe aus der Vielzahl von Gruppen klassifiziert.

3. Inspektionssystem (10) für die Textilmaschine (100) nach Anspruch 2, **dadurch gekennzeichnet, dass**
der Wert abnimmt, wenn der Anomalie-Grad in der Textilmaschine (100) zunimmt, und
wenn der Wert des neu beschafften aufgenommenen Bildes (P), das in die Zielgruppe klassifiziert wurde, niedriger ist als der höchste Wert unter den in der Speichereinheit (15) gespeicherten Werten der erfassten Bilder (P) der Zielgruppe, die Bestimmungseinheit (43) das in der Speichereinheit (15) gespeicherte, erfasste Bild (P) mit dem höchsten Wert der Zielgruppe durch das neu beschaffte erfasste Bild (P), das in die Zielgruppe klassifiziert ist, ersetzt.

4. Inspektionssystem (10) für die Textilmaschine (100) nach einem der Ansprüche 1 bis 3, **dadurch gekennzeichnet, dass** die Klassifizierungseinheit (41) das neu beschaffte erfasste Bild (P) auf Grundlage einer Erfassungszeit des erfassten Bildes (P) in die geeignete Gruppe der Vielzahl von Gruppen klassifiziert.

5. Inspektionssystem (10) für die Textilmaschine (100) nach einem der Ansprüche 1 bis 4, **dadurch gekennzeichnet, dass**
das Inspektionssystem (10) ein Anzeigegerät (17) aufweist, und
das Anzeigegerät (17) eine Tabelle (H) anzeigt, die die gezählte kumulative Anzahl der erfassten Bilder (P) angibt, die in jede der Gruppen klassifiziert sind.

6. Inspektionssystem (10) für die Textilmaschine (100) nach Anspruch 5, **dadurch gekennzeichnet, dass**
das Anzeigegerät (17) die Tabelle (H) in einem Heatmap-Format auf Grundlage der gezählten kumulativen Anzahl der erfassten Bilder (P), die in jede der Gruppen klassifiziert sind, anzeigt.

## Revendications

1. Système d'inspection (10) pour une machine textile (100), le système d'inspection (10) comprenant une caméra (11) pour capturer des images (P) de la machine textile (100), le système d'inspection (10) étant configuré pour inspecter la machine textile (100) sur la base des images (P) capturées de la machine textile (100) acquises de la caméra (11), dans lequel
le système d'inspection (10) comporte :
une unité de classification (41) configurée pour détecter un degré d'anomalie dans la machine textile (100) sur la base de chacune des images capturées (P) nouvellement acquises de la caméra (11), et pour classifier l'image capturée (P) nouvellement acquise dans un groupe approprié parmi une pluralité de groupes sur la base du degré d'anomalie détecté dans la machine textile (100) ;
une unité de stockage (15) pour stocker les images capturées (P) pour chacun des groupes ;
une unité de comptage (42) configurée pour compter le nombre cumulé des images capturées (P) d'un groupe cible, qui est le groupe dans lequel l'image capturée nouvellement acquise est classifiée, et l'unité de comptage (42) étant configurée pour stocker le nombre cumulé compté des images capturées (P) du groupe cible dans l'unité de stockage (15) ; et
une unité de détermination (43) configurée pour déterminer si le nombre cumulé compté des images capturées (P) du groupe cible stocké dans l'unité de stockage (15) a atteint une limite supérieure prédéterminée, l'unité de détermination (43) étant configurée pour stocker en outre dans l'unité de stockage l'image capturée nouvellement acquise, classifiée dans le groupe cible (15) comme l'image capturée du groupe cible lorsque l'unité de détermination (43) détermine que le nombre cumulé compté des images capturées (P) du groupe cible stocké dans l'unité de stockage (15) n'a pas atteint la limite supérieure prédéterminée, l'unité de détermination (43) étant configurée pour déterminer s'il faut remplacer une image capturée parmi les images capturées (P) du groupe cible stockées dans l'unité de stockage (15) par l'image capturée nouvellement acquise, classifiée dans le groupe cible lorsque l'unité de détermination (43) détermine que le nombre cumulé compté des images capturées (P) du groupe cible stocké dans l'unité de stockage (15) a atteint la limite supérieure prédéterminée.

2. Système d'inspection (10) pour la machine textile (100) selon la revendication 1, **caractérisé en ce que** l'unité de classification (41) convertit le degré d'anomalie dans la machine textile (100) en un score, et classifie l'image capturée (P) nouvellement acquise dans le groupe approprié parmi la pluralité de groupes sur la base du score.

3. Système d'inspection (10) pour la machine textile (100) selon la revendication 2, **caractérisé en ce que**
le score diminue quand le degré d'anomalie des machines textiles (100) augmente, et
lorsque le score de l'image capturée (P) nouvellement acquise et classifiée dans le groupe cible est inférieur au score le plus élevé parmi les scores des images capturées (P) du groupe cible stockés dans l'unité de stockage (15), l'unité de détermination (43) remplace l'image capturée (P) ayant le score le plus élevé du groupe cible stocké dans l'unité de stockage (15) par l'image capturée (P) nouvellement acquise et classifiée dans le groupe cible.

4. Système d'inspection (10) pour la machine textile (100) selon une quelconque des revendications 1 à 3, **caractérisé en ce que** l'unité de classification (41) classifie l'image capturée (P) nouvellement acquise dans le groupe approprié parmi la pluralité de groupes sur la base d'un temps de capture de l'image capturée (P).

5. Système d'inspection (10) pour la machine textile (100) selon une quelconque des revendications 1 à 4 **caractérisé en ce que**
le système d'inspection (10) comporte un dispositif d'affichage (17), et
le dispositif d'affichage (17) affiche un tableau (H) indiquant le nombre cumulé compté des images capturées (P) classifiées dans chacun des groupes.

6. Système d'inspection (10) pour la machine textile (100) selon la revendication 5, **caractérisé en ce que**
le dispositif d'affichage (17) affiche le tableau (H) dans un format de carte thermique, sur la base du nombre cumulé des images capturées (P) classées dans chacun des groupes.
